# EUROPEAN PATENT APPLICATION

(11) **EP 2 536 139 A1**
(43) Date of publication of application: **19.12.2012**
(21) Application number: 11461520.6
(22) Date of filing: 15.06.2011
(51) Int. Cl.: H04N 7/16, H04N 21/4623, H04N 21/418

(54) **Method, system and decoder for conditional access of a transmitted audiovisual signal for a multiple rooms service**

(71) Applicant: Cyfrowy Polsat Technology Sp. z o.o., 03-878 Warszawa (PL)
(72) Inventor: Dzialkowski, Dariusz, 04-113 Warszawa (PL); Dawidziuk, Adam, 04-913 Warszawa (PL)
(74) Representative: Wlasienko, Jozef

(57) **Abstract**

The invention relates to a method and system of conditional access for the reception of a transmitted audiovisual signal for multiroom service allowing the subscriber to legally access different channels of satellite and cable television by at least two television receivers within one subscription. The present solution also relates to a decoder suitable to carry out said method and system. The decoder is characterized in that it comprises a protective module (350) integrated into its structure and controlled by the central processing unit (345). The protective module (350) is provided with an integrated into its structure verification module (390) and a resetting module (370) and/or a modification module (380) coupled with a clock (360) for measuring a predetermined moment of time after the lapse of which a reactivation process of a slave decoder (STB_S1) and/or (STB_S2) ... and/or (STB_Sn) is required.

## Description

### Field of the Invention

The invention relates to a method and system of conditional access for the reception of a transmitted audiovisual signal for multiroom service allowing the subscriber to legally access different channels of satellite and cable television by at least two television receivers within one subscription. The present solution also relates to a decoder suitable to carry out said method and system.

### Description of the Prior Art

Generally, to obtain access to an encrypted audiovisual content (such as films, sports and musical events, news, etc.) broadcasted by satellite and cable television operators it is necessary to purchase a subscription together with a decoder and a smart card inserted in a decoder card reader. Some subscribers, however, would like to have the possibility of watching different channels using several television receivers located in different rooms of one household. This entails the necessity to provide several decoders so that many users in the same household can access different broadcasted audiovisual content by several television receivers located in different rooms of the household. In such case, however, there is a danger that an audiovisual signal received by one subscriber is then illegally used in another household within one and the same subscription.

The prior art discloses solutions allowing to legally watch different channels on several television receivers, for example two television receivers, within one subscription. Such solutions require the use of a special set consisting of protective modules: the main module and an additional module. Both protective modules, the main module and the additional module, are suitably modified smart cards, often called multiroom modules, which are inserted instead of a standard smart card in a decoder card reader. The main module is a specialized smart card inserted in a master decoder connected to a most frequently used television receiver, and the additional module is a specialized smart card cooperating with a slave decoder of another television receiver. As an example both television receivers may be connected by means of decoders to a satellite antenna. An additional module must be activated at predetermined moments of time. It depends on how long the user watches television and such an operation is carried out by bringing the additional module located on a suitably modified smart card in close proximity of the main module located on a suitably modified smart card associated to the master decoder. After activation, both the devices operate simultaneously enabling the user to receive digital TV signal in, for example, two rooms independently, within one subscription. The purpose of such the solution is to eliminate the situation when individual decoders are used, for example, in two different households. The production of specialized smart cards providing multiroom service within one household generates, however, relatively high costs for satellite or cable TV operators.

European patent document EP 0 826 2881 B1 entitled "Smart Card chaining in pay television systems" describes a Pay-TV system in which a subscriber has at least two decoders, each decoder being associated to a smart card intended to allow the decryption of the content sent to decoders connected to a television system. Each smart card contains a certain amount of data that allows its identification. This information, called "chaining data", is for example a signature, a key or another determining element. All the cards connected to the same subscriber have at least one item of chaining data in common. The cards of different subscribers do not have any data in common.

The subscriber's cards are deactivated after certain duration of use. The content sent to the decoder in question can no longer be decrypted. Deactivated cards can be reactivated if the subscriber has another card that is still active and has a decoder connected to the same subscriber. To implement this, the system according to said invention operates in the following way. The data connected to an active card is first stored in the decoder into which this card is inserted or brought in close proximity of it. When a card is deactivated, it must be inserted into or brought in close proximity of a decoder associated to an active card of the subscriber. The chaining data such as the signature, the key, etc. stored in the decoder, are authenticated with the deactivated card chaining data. If the data matches, the card is reactivated for certain time duration. If the chaining data does not match, the card is not reactivated.

In this system, any decoder connected to an active card of the subscriber can allow the reactivation of a deactivated card of the same subscriber. In this way, if the subscriber's cards have been sold to people geographically close to the original subscriber, the people with a deactivated card can insert this card into any decoder associated with an active card of the subscriber in order to restart functioning.

### Summary of the Invention

The purpose of the present invention is to propose a new solution that eliminates the situation when individual decoders are used in at least two different households within one and the same subscription. By the same, the invention offers the operators of satellite and cable TV the possibility to guarantee that an audiovisual signal received by a subscriber is not illegally shared within the same subscription in another household.

The present solution provides multiroom service providers, i.e. the satellite or cable TV operators as well as distributors of television channels with a simple and efficient tool for monitoring legal use of decoders without the necessity to bear the high costs relating to the production of specialized smart cards provided with protective modules.

In view of the above-described problems, there is a need to create a method and system of conditional access for the reception of a transmitted audiovisual signal for multiroom service allowing the user to legally watch various channels of satellite or cable TV by means of at least two television receivers located in different rooms, within one subscription. Providing such solution seems to be important in view of the fact that the implementation of new satellite and cable technologies results in an increasing number of television channels offered and thus a greater choice of programs, which consequently leads to the situation when different users in one household wish to watch different programs at the same time.

The solution of the present invention provides a method of conditional access for the reception of a transmitted audiovisual signal for multiroom service enabling access to different channels by means of at least two television receivers simultaneously, in particular within one subscription, wherein subsequent television receivers with slave decoders located in one household are activated within an activation process at predetermined moments of time, characterized in that, each time, the activation process is carried out by means of a standard master smart card associated to a master decoder, which master card, at a predetermined moment of time, is inserted in or brought in close proximity of one of the slave decoders at a request of a transmission center, each slave decoder being provided with a protective module integrated into its structure and equipped with a verification module by means of which said master smart card associated with the master decoder is verified, and if the verification process is not successful, relevant slave decoder is disabled for multiroom service until successful verification.

Preferably, subsequent activation processes of a relevant slave decoder are carried out after the lapse of predetermined moments of time counted down by the clock located in the protective module of a relevant slave decoder.

Preferably, the predetermined moments of time of subsequent activation processes of a relevant slave decoder are set in the clock by means of a modification module located together with the clock in the protective module of a relevant slave decoder.

Preferably, a predetermined moments of time of subsequent activation processes of a slave decoder are set remotely in the clock on the basis of a request signal transmitted as a broadcast transmission from a transmission center of the audiovisual service provider to the master decoder and slave decoders.

Preferably, a request signal from a transmission center of the audiovisual signal provider is received by means of the modification module integrated into the structure of the protective module of a slave decoder.

Preferably, the verification process consists in comparing a unique number stored on the master smart card associated with the master decoder with the number stored in a slave decoder.

Furthermore, the solution of the present invention provides a system of conditional access for the reception of a transmitted audiovisual signal for multiroom service comprising a set in the form of the master decoder connected to the most frequently used television receiver and at least one slave decoder connected to another television receiver, said decoders: the master decoders and at least one slave decoder being provided with an associated smart card, characterized in that a slave decoder provided with an a protective module integrated into its structure is activated at a predetermined moment of time by means of the master smart card associated to the master decoder; the predetermined moment of time being set in the clock of the protective module by means of a modification module communicating with a transmission center of the audiovisual signal provider.

The solution according to the present invention also provides a product in the form of a computer program characterized in that it comprises instructions for the execution of all steps of the method, said computer program being run in a slave decoder of the system of conditional access for the reception an audiovisual signal for multiroom service, transmitted by a transmission center.

An integral component element of the claimed method and system according to the present invention is a slave decoder enabling conditional access for the reception of a transmitted audiovisual signal for multiroom service, which decoder is provided with the central processing unit coupled with a power supply system, a tuner-demodulator module connected to an antenna by means of an antenna input, a card reader controlled by a card control system, RAM and FLASH memory, a visual display system coupled with a display and an input/output interface for supplying a relevant audiovisual signal to a receiving device, characterized in that it comprises a protective module integrated into its structure and controlled by the central processing unit.

Preferably, the protective module is provided with a clock integrated into its structure for counting down the predetermined moment of time, after the lapse of which relevant slave decoder and/or slave decoders must be reactivated.

Preferably, the clock is coupled in the protective module with a resetting module for zeroing the predetermined moment of time.

Preferably, the clock is coupled in the protective module with a modification module for setting the predetermined moment of time of the clock on the basis of a request signal from the transmission center of the audiovisual signal provider.

Preferably, the protective module is provided with a verification module integrated into its structure for verifying the master smart card associated with the master decoder.

The solution of the present invention has the advantage of using standard smart cards which do not require any modifications and, more importantly, production of new cards, as in the case of known solutions from the prior art. Modifications are made only in decoders and only those which are subsequent next decoders in a household. It is also essential that modifications may be made both in currently produced new decoders and those already available on the market. One should note that the term "decoder" is used here in a broader meaning and refers to a set-top box (STB), i.e. an electronic device connected to a television receiver which allows to play video and sound, access internet sites, play computer games, etc.

### Brief Description of the Drawings

The subject matter of the invention is presented in the embodiment with reference to the enclosed figures, wherein:
FIG. 1 shows a general diagram of connections between elements of the system of conditional access for the reception of a transmitted audiovisual signal for multiroom service according to the present invention;
FIG. 2 shows a general flowchart of the operations of the system of conditional access for the reception of a transmitted audiovisual signal for multiroom service;
FIG. 3 shows a diagram of a suitably modified slave decoder that carries out the method and system of conditional access for the reception of a transmitted audiovisual signal for multiroom service according to the present invention.

### Detailed description of the Invention

The subject matter of the invention is described in detail below with reference to the enclosed figures and an embodiment. The present embodiment, however, serves only an example and the invention is not limited only to the embodiment presented herein.

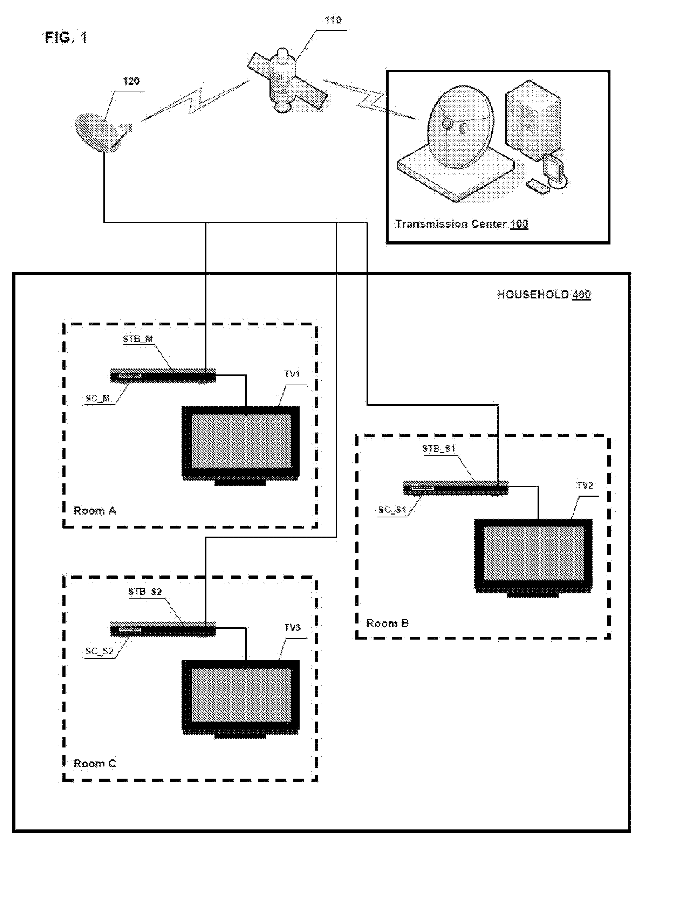

In the embodiment illustrated in Fig. 1 the subscriber has three decoders: the master decoder STB_M and suitably modified slave decoders STB_S1 and STB_S2 carrying out the method and system of conditional access for reception of the transmitted audiovisual signal for multiroom service. Each decoder is associated with one of the standard smart cards, for the master decoder, SC_M and for slave decoders, SC_S1 and SC_S2, respectively. The master decoder STB_M with smart card SC_M is connected with the most frequently used television receiver TV1 located in room A of a household 400, and the remaining suitably modified decoders STB_S1 and STB_S2 with smart cards SC_S1 and SC_S2, respectively, are connected with the remaining television receivers TV2 and TV 3, respectively, located in rooms B and C, respectively, of the household 400. All television receivers TV1, TV2 and TV3 are connected by means of decoders STB_M, STB_S1 and STB_S2 with a satellite antenna 120 which receives audiovisual signals from a transmission center 100 via a satellite 110. One should point out that the above solution does not exclude the possibility of using a cable television solution which does not require satellite antennas.

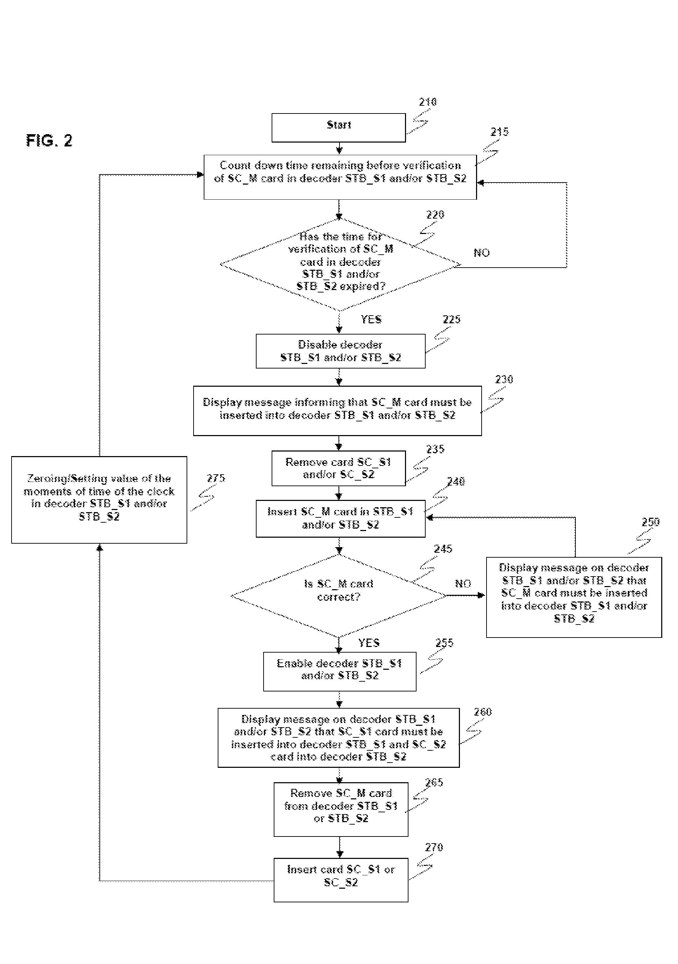

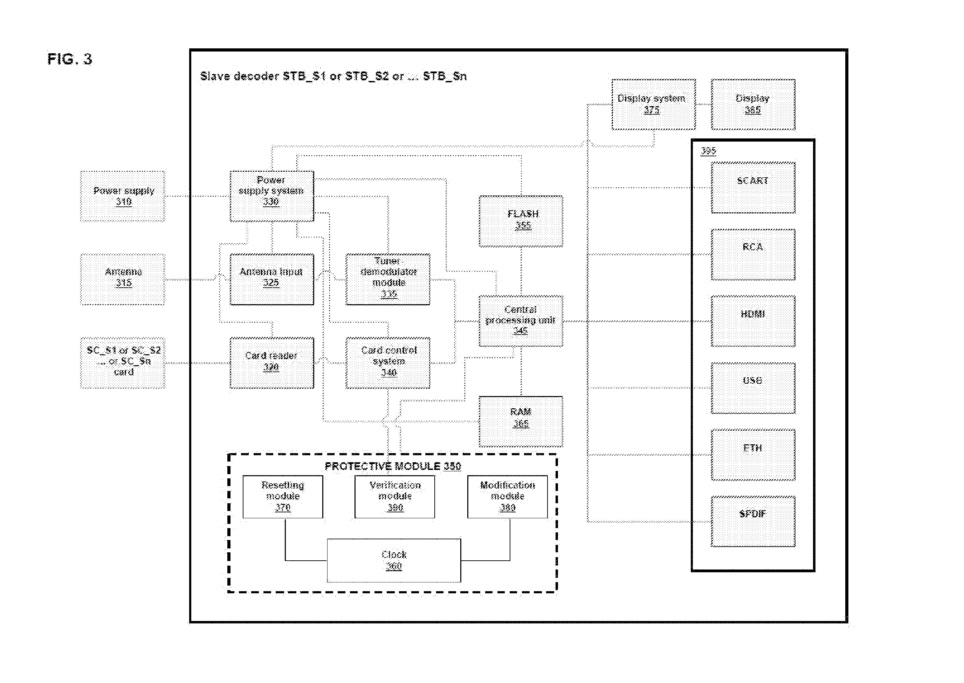

The transmission center 100 according to the present invention broadcasts a request signal to the master decoder STB_M and to slave decoders STB_S1 and STB_S2 and enforces verification of the legal usage of the slave decoders in multiroom service in the household 400. One should note that only slave decoders STB_S1 and STB_S2 are able to receive, by means of a protective module 350 integrated into their structures (See description of Fig. 3 below), a request signal from the transmission center 100 and carry out a suitable modification as shown in Fig. 2.

The method of the present invention, as presented in Fig. 2, is applicable when the subscriber in the household 400 is provided with at least the following decoders: a master decoder STB_M with a smart card SC_M and at least one suitably modified slave decoder STB_S1 with a smart card SC_S1. As previously mentioned, the present embodiment of the invention comprises three decoders (the master decoder and two slave decoders), but there are no technical obstacles for a greater number of slave decoders. The operator of satellite or cable TV may, however, set the maximum limit on the number of decoders to carry out the method and system of conditional access for the reception of a transmitted audiovisual signal for multiroom service within one household 400.

The method of conditional access for multiroom service is initiated with step 210 wherein multiroom service is activated within one household 400. In step 215, as shown in the diagram of connections in Fig. 1 and flowchart of operations in Fig. 2, slave decoders STB_S1 and STB_S2 by means of protective modules 350 with a clock 360 both integrated into the structure of each module, each time count down the time of verification of the master smart card SC_M (associated to the master decoder STB_M) in each slave decoder STB_S1 and/or STB_S2. If the time for verifying the master card SC_M in decoder STB_S1 and/or STB_S2 has expired (step 220), slave decoder STB_S1 and/or STB_S2 is disabled in step 225; otherwise, step 215 is repeated.

After a slave decoder has been disabled in step 225, step 230 is carried out, in which, due to the disabled slave decoder STB_S1 and/or STB_S2, a message is displayed that the master smart card SC_M must be inserted into slave decoder STB_S1 or STB_S2. The master smart card SC_M is inserted therein in the following way. First, slave smart card SC_S1 or SC_S2 is removed from slave decoder STB_S1 or STB_S2, respectively, (step 235), and then the master smart card SC_M is inserted into slave decoder STB_S1 or STB_S2 (step 240). If the master smart card SC_M has been successfully verified in step 245, which means that the card's authenticity has been confirmed by the verification module 390 integrated into the structure of protective module 350 located in slave decoder STB_S1, STB_S2 wherein a unique number identifying the master smart card SC_M of the master decoder STB_M is stored, the subscriber is able to receive an audiovisual signal. Thus, slave decoder STB_S1 and/or STB_S2 is enabled (step 255) and subsequently a message is displayed on decoder STB_S1 and/or STB_S2 that slave smart card SC_S1 must be inserted in decoder STB_S1 and slave smart card SC_S2 into decoder STB_S2, respectively (step 260). This process is carried out in the following way. First, the master smart card SC_M is removed from slave decoder STB_S1 or STB_S2 (step 265) and, subsequently, slave smart card SC_S1 or SC_S2 is inserted into respective slave decoders STB_S1 or STB_S2 (step 270). Otherwise, decoder STB_S1 and/or STB_S2 displays a message (step 250) that the master smart card SC_M must be inserted into slave decoder STB_S1 or STB_S2 to reinitiate step 240.

In each case, step 270 is followed by step 275 in which the moment of time in the clock 360 is zeroed by means of a resetting module 370 and a new moment of time is set in the clock 360 of slave decoder STB_S1 and/or STB_S2, the moment of time set in the clock 360 may have a predetermined value, for example 4 hours. According to the present invention the moments of time of the clock 360 of the protective module 350 are modified on the basis of a request signal. Each time, the operator of a satellite platform or cable television may at any moment of time transmit a request signal from the transmission center 100 of the audiovisual signal provider. Such operation may be carried out, on the one hand, to change the settings of the clock 360 by means of the modification module 380 located respectively in the protective module 350 of respective slave decoders STB_S1 and STB_S2, and on the other hand to disable a slave decoder until operations shown in Fig. 2 have been carried out. Such situation may occur, for example, when an important event, such as a football match, is broadcasted. In such case, a request signal is sent from the transmission center 100 shortly before the transmission of the match in order to check if a given decoder is actually located in the indicated household 400; simultaneously decoders are disabled until successful verification. As already mentioned, the predetermined moments of time of relevant slave decoders STB_S1 and/or STB_S2 are typically set for 4 hours, which means that slave decoders STB_S1 and/or STB_S2 must be verified by means of the master smart card SC_M every 4 hours. As a result a greater safety is obtained, and when the subscriber using multiroom service proves to be reliable, the moments of time of individual slave decoders STB_S1, STB_S2 set in the clock 360 may be significantly extended, for example up to 24 hours, or even set once a week or will be checked only on a request of the transmission center 100 of the audiovisual signal provider.

Finally, the process goes to step 215 again where time remaining before subsequent verification of the master smart card SC_M is counted down again on the request of the clock 360 of a slave decoder STB_S1 and/or STB_S2, and, indirectly, on the request of the transmission center 100.

The method according the invention may be carried out by inserting smart cards in decoders or by bringing them in close proximity thereof depending on the construction of a decoder and a smart card, the master smart card SC_M in particular.

The method and system according to the invention, requires a suitably modified slave decoder. The main component of a suitably modified slave decoder, which component constitutes the solution of the present invention, is marked with a dashed line in Fig. 3. The remaining component elements of the decoder shown in Fig. 3 have been included for illustrative purposes only and are not discussed in detail in the present description. The slave decoder is provided with a central processing unit 345 coupled with a memory systems RAM 365 and FLASH 355, a supply system 330 for power supply 310, an antenna input 325 for an antenna 315 connected to a tuner-demodulator module 335, a card reader 320 for inserting smart card SC_S1 or SC_S2 or ... SC_Sn controlled by a card control system 340, the tuner-demodulator module 335, thanks to information stored in card SC_S1 or SC_S2 or ... SC_Sn, receives and decrypts a signal received from the antenna 315 and based on the central processing unit 345 controls the display system 375 coupled with a display 385 and an input/output interface 395 (marked with bold solid line in Fig. 3) comprising the following interfaces: SCART, RCA, HDMI, USB, ETH, SPDIF in order to deliver a relevant television channel signal to television receiver(s) TV1, TV2, TV3.

In the embodiment, the suitably modified decoders are decoders STB_S1 and STB_S2, each of them being provided with a protective module 350 integrated into their structure and controlled by the central processing unit 345, the protective module 350 comprises a clock 360 for counting down predetermined moments of time after which slave decoder STB_S1 and/or STB_S2 must be reactivated. The clock 360 is coupled in the protective module 350 with a resetting module 370 for zeroing the moment of time and/or with a modification module 380 for setting the moment of time remaining before subsequent verification of a slave decoder on the basis of a request signal from a transmission center 100 of the audiovisual signal provider. The protective module 350 is further provided with a verification module 390, integrated into its structure, for verifying the master smart card SC_M associated with the master decoder STB_M.

The above description of the embodiment of the invention has been provided to enable a person skilled in the art to carry out or use the invention. The present embodiment may be modified to include changes, modifications and variants that fall within the scope of the essence of the invention and the enclosed patent claims. The basic rules presented herein may be applied in other embodiments without extending the scope of the invention. The purpose of the present invention therefore is not to limit it to the presented embodiment but to provide it with the widest possible scope consistent with the principles and new features presented therein.

The present invention, using technical means shown in Fig. 1 and Fig. 3 and combing them in a suitable way, offers a simple and efficient tool for monitoring legal use of decoders provided with protective modules, on the one hand, and on the other, for disabling illegally used decoders by means of a protective module, without the necessity to bear the high costs connected with the production of specialized smart cards.

The invention may be widely used for multiroom service offered by constantly growing numbers of satellite and cable television operators who are interested in providing their clients with the possibility of watching television content using several television receivers within one subscription, with a simultaneous guarantee for the former that the service is used within one household.

## Claims

1. A method of conditional access for the reception of a transmitted audiovisual signal for multiroom service enabling access to different channels by at least two television receivers simultaneously, in particular within one subscription, wherein subsequent television receivers with slave decoders located in one household are activated within an activation process at predetermined moments of time, **characterized in that** each time the activation process is carried out by means of a standard master smart card (SC_M) associated to a master decoder (STB_M) which master card, at a predetermined moment of time, is inserted in or brought in close proximity to a slave decoder (STB_S1) or (STB_S2) or ... (STB_Sn) at the request of a transmission center (100), each slave decoder being provided with a protective module (350) integrated into its structure and equipped with a verification module (390) by means of which said master smart card (SC_M) associated with the master decoder (STB_M) is verified, and if the verification process is not successful, a slave decoder (STB_S1) and/or (STB_S2) ... and/or (STB_Sn), respectively, is disabled for multiroom service until successful verification.

2. The method according to claim 1, **characterized in that** subsequent activation processes of the slave decoder (STB_S1) and/or (STB_S2) ... and/or (STB_Sn) are carried out after the lapse of a given moment of time which is counted down by the clock (360) located in the protective module (350) of a slave decoder (STB_S1), (STB_BS2), ... , (STB_Sn).

3. The method according to claim 1 or 2, **characterized in that** the predetermined moments of time of subsequent activation processes of a slave decoder (STB_S1) and/or (STB_S2) ... and/or (STB_Sn) are set in the clock (360) by means of a modification module (380) located together with the clock (360) in the protective module (350) of a slave decoder (STB_S1), (STB_S2), ... , (STB_Sn).

4. A method according to claim 3, **characterized in that** a predetermined moments of time of subsequent activation processes of a slave decoder (STB_S1) and/or (STB_S2) ... and/or (STB_Sn) are set remotely in the clock (360) on the basis of a request signal transmitted as a broadcast transmission from a transmission center (100) of an audiovisual service provider to the master decoder (STB_M) and slave decoders (STB_S1), (STB_S2), ... , (STB_Sn).

5. The method according to claim 4, **characterized in that** a request signal from a transmission center (100) of an audiovisual service provider is received by means of the modification module (380) integrated into the structure of the protective module (350) of a slave decoder (STB_S1), (STB_S2), ... , (STB_Sn).

6. The method according to claim 1, **characterized in that** the verification process consists in comparing a unique number stored on the master smart card (SC_M) associated with the master decoder (STB_M) with a number stored in a slave decoder (STB_S1), (STB_S2), ... , (STB_Sn).

7. A system of conditional access for the reception of a transmitted audiovisual signal for multiroom service comprising a set in the form of a master decoder connected to the most frequently used television receiver and at least one slave decoder connected to another television receiver, said decoders: the master decoder and at least one slave decoder being provided with an associated smart card **characterized in that** a slave decoder (STB_S1), (STB_S2), ... , (STB_Sn) provided with an integrated into its structure protective module (350) is activated at a predetermined moment of time by means of a master smart card (SC_M) associated with a master decoder (STB_M), the predetermined time being set in the clock (360) of the protective module (350) by means of a modification module (380) communicating with the transmission center (100) of the audiovisual signal provider.

8. A product in the form of a computer program, **characterized in that** it comprises instructions for the execution of all steps of the method according to claims 1-6, said computer program being run in a slave decoder (STB_S1), (STB_S2), ... , (STB_Sn) of the system of conditional access according to claim 7 for the reception an audiovisual signal for multiroom service, transmitted by the transmission center (100).

9. A slave decoder enabling conditional access for the reception of a transmitted audiovisual signal for multiroom service is provided with a central processing unit coupled with a power supply system, a tuner-demodulator module connected to an antenna by means of an antenna input, a card reader controlled by a card control system, RAM and FLASH memory, a display system coupled with a display, and an input/output interface in order to deliver a relevant audiovisual signal to a receiving device, **characterized in that** it is provided with an integrated into its structure a protective module (350) controlled by the central processing unit (345).

10. The slave decoder according to claim 9, **characterized in that** the protective module (350) is provided with a clock (360) integrated into its structure for counting down a predetermined moment of time after the lapse of which a slave decoder (STB_S1) and/or (STB_S2) ... and/or (STB_Sn) must be reactivated.

11. The slave decoder according to claim 10, **characterized in that** the clock (360) is coupled in the protective module (350) with a resetting module (370) for zeroing the predetermined moment of time.

12. The slave decoder according to claim 10 or 11, **characterized in that** the clock (360) is coupled in the protective module (350) with a modification module (380) for setting a predetermined moment of time of the clock (360) on the basis of a request signal from the transmission center (100) of an audiovisual signal provider.

13. The slave decoder according to claim 9 or 10 or 11 or 12, **characterized in that** the protective module (350) is provided with a verification module (390) integrated into its structure, for verifying the master smart card (SC_M) associated with the master decoder (STB_M).
